# EUROPÄISCHE PATENTSCHRIFT

(11) **EP 0 793 048 B1**
(45) Veröffentlichungstag und Bekanntmachung des Hinweises auf die Patenterteilung: **01.08.2001**
(21) Anmeldenummer: 97103000.2
(22) Anmeldetag: 25.02.1997
(51) Int. Cl.: F16L 41/12

(54) **Abzweigvorrichtung für ein Rohr**
Pipe branch device
Dispositif de branchement pour un tuyau

(30) Priorität: 27.02.1996 DE 19607287
(43) Veröffentlichungstag der Anmeldung: 03.09.1997
(73) Patentinhaber: Uponor Innovation AB, 513 81 Fristad (SE)
(72) Erfinder: Riesselmann, Franz-Josef, 49393 Lohne (DE); Dankbar, Bernhard, 48607 Ochtrup (DE); Claussen, Jörg, 48161 Münster (DE)
(74) Vertreter: Hilleringmann, Jochen, Dipl.-Ing.

(56) Entgegenhaltungen:
- DE-A- 2 358 325
- DE-A- 4 116 540
- US-A- 2 973 976
- US-A- 4 613 171
- US-A- 5 029 879

## Beschreibung

Die Erfindung betrifft eine Abzweigvorrichtung für ein Rohr, insbesondere für ein Sanitär- oder Heizungsrohr.

Bei der Verlegung von Sanitär- oder Heizungsrohren wird bei Abzweigungen derart verfahren, dass zwischen die zu verbindenden Rohrenden ein T-Abzweigstück eingesetzt wird. Dies ist insofern aufwendig, als der Einsatz des Abzweigstückes die Auftrennung einer Rohrleitung und die Anbindung von drei Rohrleitungsenden an das Abzweigstück erforderlich macht. Dies bedingt sowohl in Bezug auf den Materialeinsatz als auch in Bezug auf den Zeitbedarf ein nicht zu unterschätzender Aufwand, der zu Verteuerungen führt.

Aus US-A-2 973 976 ist eine Abzweigvorrichtung für ein Rohr bekannt, die eine Rohrschelle zum Umschließen des Rohres aufweist, welche mit einer Radialbohrung für einen konzentrisch zu dieser angeordneten Haltestutzen versehen ist. Mit dem Haltestutzen ist ein Einsatzteil verschraubt und damit gegen axiale Verschiebungen gesichert, wobei das Einsatzteil einen Rohrstutzen zum Erstrecken durch die Radialbohrung der Rohrschelle aufweist.

Ferner ist in DE-A-23 58 325 eine Rohrverbindungsvorrichtung beschrieben, bei der ein Abzweigrohr in eine radiale Bohrung eines Rohres eingeschraubt ist. Zwischen dem Gewindeende des Abzweigrohres und der Radialbohrung befindet sich ein Dichtelement, das nach Art einer Manschette die Radialbohrung von innen auskleidet und in das das Gewinde des Abzweigrohres eingeschraubt ist. Auf diese Weise ist das Abzweigrohr einerseits in der Radialbohrung dichtend angeordnet und andererseits gegen unbeabsichtigte axiale Bewegungen gesichert.

Der Erfindung liegt die Aufgabe zugrunde, eine Abzweigvorrichtung für ein Rohr, insbesondere für ein Sanitär- oder Heizungsrohr, bei dem es sich vorzugsweise um ein Kunststoffrohr oder ein Kunststoff/Metall/Kunststoff-Verbundrohr handelt, zu schaffen, die bezüglich der Verarbeitung und des aufzuwendenden Materialeinsatzes kostengünstig ist.

Zur Lösung dieser Aufgabe wird mit der Erfindung eine Abzweigvorrichtung für ein Rohr gemäß Anspruch 1 geschaffen. Vorteilhafte Weiterbildungen sind in den Unteransprüchen angegeben.

Die erfindungsgemäße Abzweigvorrichtung weist eine Rohrschelle auf, die sich um das Rohr legen lässt, von dem aus abgezweigt werden soll. Die Rohrschelle ist mit einer Radialbohrung versehen, wobei die Rohrschelle derart um das Rohr herumgelegt wird, dass die Radialbohrung der Rohrschelle mit einer sich durch die Rohrwandung hindurch erstreckenden Radialbohrung des Rohres fluchtet. Konzentrisch zur Radialbohrung der Rohrschelle weist diese einen Haltestutzen auf. In den Haltestutzen der Rohrschelle ist ein Einsatzteil einsetzbar, das in dem Haltestutzen gegen axiale Verschiebungen gesichert ist. Das Einsatzteil ist mit einem Rohrstutzen versehen, der sich im in den Haltestutzen vollständig eingeführten Zustand durch die Radialbohrung des Rohres hindurch erstreckt.

Die Rohrschelle ist ferner mit einem Dichtungselement versehen, das ringförmig ausgebildet ist und mit der Radialbohrung der Rohrschelle fluchtet. Das Dichtungselement steht über die Innenseite der Rohrschelle über und ragt in die Radialbohrung des Rohres hinein. Das Dichtungselement ist mit einem innen an der Rohrschelle anliegenden konzentrisch zur Radialbohrung verlaufenden ersten Dichtungsabschnitt sowie mit einem einstückig mit dem ersten Dichtungsabschnitt verbundenen zweiten Dichtungsabschnitt versehen, der in die Radialbohrung der Rohrschelle hineinragt.

In dem Zustand, in dem die Rohrschelle um das Rohr herumgelegt ist, liegt der erste Dichtungsabschnitt an dem Außenumfang der Radialbohrung des Rohres an und dichtet diese Bohrung gegenüber der Rohrschelle ab. Der zweite Dichtungsabschnitt erstreckt sich in die Radialbohrung des Rohres hinein und wird dann, wenn der Rohrstutzen des Einsatzteils sich in seinem freien Ende durch die Radialbohrung des Rohres hindurch erstreckt, gegen die Innenseite der Radialbohrung des Rohres gedrückt, um auch in diesem Bereich für eine fluiddichte Abdichtung zu sorgen. Im Falle eines Mehrschichtverbundrohres sorgt der zweite Dichtungsabschnitt ferner für die Abdichtung der Metalleinlage des Verbundrohres und verhindert auf diese Weise, daß die Metalleinlage in Kontakt mit dem in dem Rohr befindlichen Fluid gelangt, womit ein Korrosionsschutz gegeben ist.

Im entspannten Zustand des Dichtungselements, d.h. in demjenigen Zustand, in dem der Rohrstutzen des Einsatzteils sich nicht durch den zweiten Dichtungsabschnitt des Dichtungselements hindurch erstreckt, verläuft das Dichtungselement zu seinem dem ersten Dichtungsabschnitt abgewandten freien Ende hin konisch zu. Dies erleichtert das Aufsetzen der Rohrschelle auf das Rohr bzw. das Einsetzen des zweiten Dichtungsabschnitts des Dichtungselements in die Radialbohrung des Rohres. Zweckmäßigerweise ist das freie Ende des zweiten Dichtungsabschnitts des Dichtungselements mit einem nach außen gerichteten dritten Dichtungsabschnitt versehen, der insbesondere als Dichtungswulst ausgebildet ist und der zum Umgreifen des inneren Radialbohrungsrandes des Rohres vorgesehen ist. Das Einsatzteil ist vorzugsweise mit einem sich konisch zum Ende hin verjüngenden Rohrstutzen versehen, was das Eintauchen in das Dichtungselement erleichtert.

Wie bereits oben erwähnt, ist das Einsatzteil gegen axiale Verschiebungen im Haltestutzen der Rohrschelle angeordnet. Diese Sicherung gegen axiale Verschiebungen wird vorzugsweise vermittels eines Gewindeeingriffs zwischen dem Haltestutzen und dem Einsatzteil bewerkstelligt. Das Eintauchen des Rohrstutzens des Einsatzteils in das Dichtungselement erfolgt also durch Einschrauben des Einsatzteils in den Haltestutzen der Rohrschelle.

Die erfindungsgemäße Abzweigvorrichtung macht ein separates T-Stück zum Abzweigen eines Sanitär- oder Heizungsrohres, welches insbesondere aus Kunststoff oder aus einem Kunststoff/Metall-Verbund besteht, entbehrlich. Es ist lediglich noch erforderlich, in das Rohr, von dem aus abgezweigt werden soll, eine Radialbohrung einzubringen, um dann die erfindungsgemäß vorgesehene Rohrschelle derart auf das Rohr aufzusetzen, daß der zweite Dichtungsabschnitt des Dichtungselements in die Radialbohrung des Rohres eintaucht. Beim Einbringen des Einsatzteils in den Haltestutzen der Rohrschelle taucht das Ende des Rohrstutzens des Einsatzteils in das Dichtungselement ein, um dessen zweiten Dichtungsabschnitt gegen die Innenwandung der Radialbohrung des Rohres zu drücken. Auf diese Weise liegt das Dichtungselement mit seinem ersten Dichtungsabschnitt im Außenrandbereich der Radialbohrung des Rohres und in seinem zweiten Dichtungsabschnitt von innen an der Radialbohrung des Rohres an, wobei das Dichtungselement Maßtoleranzen und eine gegebenenfalls nicht exakt radiale Ausrichtung der Bohrung in der Wandung des Rohres unter Aufrechterhaltung der Dichtfunktion ausgleicht. Aus der vorstehenden Beschreibung wird deutlich, daß mit der erfindungsgemäßen Abzweigvorrichtung separate T-Abzweigstücke oder Y-Abzweigstücke entbehrlich werden.

Nachfolgend wird anhand der Figuren ein Ausführungsbeispiel der Erfindung päher erläutert Tm einzelpen zeigen :
- Fig. 1: in Seitenansicht eine teilweise auf ein Kunststoff/Metall/Kunststoff-Verbundrohr aufgesetzte Abzweig-Rohrschelle im nicht vollständig geschlossenen Zustand,
- Fig. 2: die Rohrschelle gemäß Fig. 1 im geschlossenen Zustand und bei nicht eingeschraubtem Einsatzteil,
- Fig. 3: eine vergrößerte Ansicht der Rohrschelle im Bereich von deren Haltestutzen bei nicht vollständig mit diesem verschraubtem Einsatzteil und
- Fig. 4: die Querschnittsansicht der Rohrschelle gemäß Fig. 3 bei vollständig mit dem Haltestutzen verschraubtem Einsatzteil und vollständig in das Dichtungselement eingetauchtem Rohrstutzen des Einsatzteils.

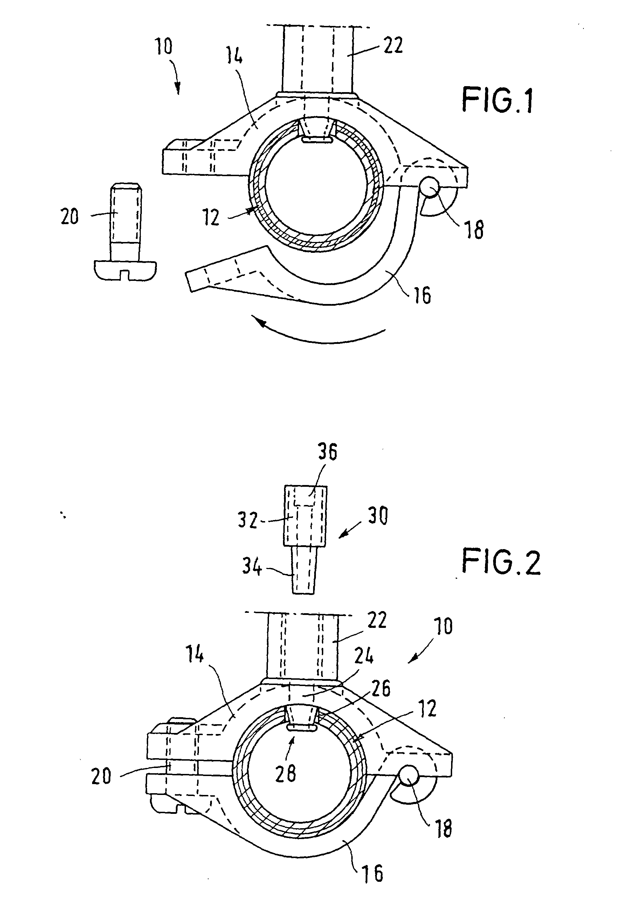

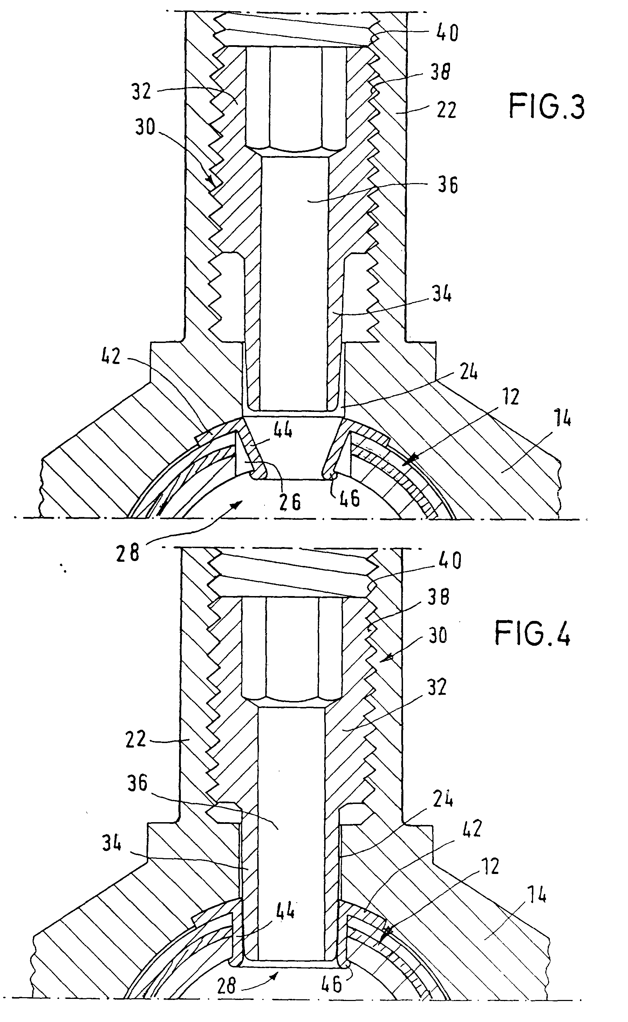

Fig. 1 zeigt in Seitenansicht eine zweiteilige Rohrschelle 10, die teilweise um ein Kunststoff/Metall/ Kunststoff-Verbundrohr 12 herumgelegt ist, welches in den Figuren im Querschnitt dargestellt ist. Die Rohrschelle 10 weist ein Oberteil 14 und ein mit diesem an einem radialen Ende gelenkig verbundenen Unterteil 16 auf. Die beiden dem Gelenk 18 der Rohrschelle 10 abgewandten Enden der Rohrschellenteile 14 und 16 sind mittels einer Schraube 20 miteinander verbindbar. Vermittels der Schraube 20 lassen sich die beiden Rohrschellenteile 14 und 16 allseitig von außen gegen das Rohr 12 festspannen. Einstückig mit dem oberen Teil 14 der Rohrschelle 10 verbunden ist ein radial abstehender Haltestutzen 22, der konzentrisch zu einer Radialbohrung 24 angeordnet ist, die sich durch den oberen Teil 14 der Rohrschelle radial hindurch erstreckt. Das Rohr 12 weist eine Radialbohrung 26 auf, die mit der Bohrung 24 der Rohrschelle 10 fluchtet und damit konzentrisch zum Haltestutzen 22 der Rohrschelle 10 angeordnet ist An dem oberen Teil 14 der Rohrschelle 10 ist ein Dichtungselement 28 aus elastischem Material angeordnet, das sich durch die Radialbohrung 26 des Rohres 12 hindurch erstreckt. In den Haltestutzen 22 der Rohrschelle 10 läßt sich ein Einsatzteil 30 einschrauben, das aus einem Eingriffabschnitt 32 zum Eingreifen mit dem Haltestutzen 22 und einem konisch sich verjüngenden Rohrstutzen 34 besteht. Durch das Einsatzteil 30 hindurch erstreckt sich eine axiale Durchgangsbohrung 36. Das Einsatzteil 30 läßt sich mit dem Haltestutzen 22 verschrauben, wozu am Einsatzteil 30 ein Außengewinde 38 und am Haltestutzen 22 ein Innengewinde 40 vorgesehen ist (s. Fign. 3 und 4).

Wie in den Fign. 3 und 4 gezeigt, weist das Dichtungselement 28 einen ersten Dichtungsabschnitt 42 auf, der nach Art eines Ringflansches ausgebildet ist und sich um die Radialbohrung 24 der Rohrschelle 10 herum an der Innenseite des oberen Teils 14 der Rohrschelle 10 erstreckt. An den ersten Dichtungsabschnitt 42 schließt sich ein zweiter Dichtungsabschnitt 44 an, der bei das Rohr 12 umschließender Rohrschelle 10 in die Radialbohrung 26 des Rohres 12 hineinragt und sich durch diese hindurch erstreckt. An den zweiten Dichtungsabschnitt 44 schließt sich ein dritter Dichtungsabschnitt 46 in Form eines Außenringwulstes an, der die Radialbohrung 26 des Rohres 12 an dessen Innenwandung umgreift.

Fig. 3 zeigt die Ausrichtung der Dichtungsabschnitte 42 bis 46 des Dichtungselements 28 in dem Zustand, in dem das Einsatzteil 30 nicht vollständig mit dem Haltestutzen der Rohrschelle 10 verbunden ist und in dem insbesondere das freie Ende des Rohrstutzens 34 des Einsatzteils 30 noch nicht in das Dichtungselement 28 und damit in die Radialbohrung 26 des Rohres 12 eingetaucht ist. Im (entspannten) Zustand des Dichtungselements 28 gemäß Fig. 3 verläuft dessen zweiter Dichtungsabschnitt 44 konisch, während in demjenigen Zustand, in dem der Rohrstutzen 34 des Einsatzteils 30 in die Radialbohrung 26 des Rohres 12 eingetaucht ist, der zweite Dichtungsabschnitt 44 des Dichtungselements 28 an der Innenwandung der Radialbohrung 26 des Rohres 12 dichtend anliegt (Fig. 4). Da der erste Dichtungsabschnitt 42 des Dichtungselements 28 nach innen über den oberen Teil 14 der Rohrschelle 10 vorsteht, liegt das Dichtungselement 28 außen im Randbereich der Radialbohrung 26 des Rohres 12 dichtend an. Auf diese Weise dichtet das Dichtungselement 28 die Radialbohrung 26 des Rohres 12 zuverlässig gegenüber dem Rohrstutzen 34 des Einsatzteils 30 und gegenüber der Rohrschelle 10 ab.

## Patentansprüche

1. Abzweigvorrichtung für ein Rohr, insbesondere ein Sanitär- oder Heizungsrohr, mit
- einer Rohrschelle (10) zum Umschließen des Rohres (12), wobei die Rohrschelle (10) eine Radialbohrung (24) und einen konzentrisch zu dieser angeordneten Haltestutzen (22) aufweist, und
- einem Einsatzteil (30), das in den Haltestutzen (22) gegen axiale Verschiebungen gesichert einsetzbar ist und einen Rohrstutzen (34) zum Erstrecken durch die Radialbohrung (24) der Rohrschelle (10) aufweist,
**gekennzeichnet durch**
- ein Dichtungselement (28), das einen von innen an der Rohrschelle (10) anliegenden konzentrisch zur Radialbohrung (24) der Rohrschelle (10) verlaufenden ersten Dichtungsabschnitt (42) und einen von diesem abstehenden zweiten Dichtungsabschnitt (44) aufweist, der zum Andrücken gegen die Innenseite einer mit der Radialbohrung (24) der Rohrschelle (10) fluchtenden Bohrung (26) eines von der Rohrschelle (10) umschlossenen Rohres (12) bei sich bis durch das Dichtungselement (28) erstreckendem Rohrstutzen (34) des Einsatzteils (30) vorgesehen ist.

2. Vorrichtung nach Anspruch 1, dadurch gekennzeichnet, dass der zweite Dichtungsabschnitt (44) bei das Dichtungselement (28) nicht durchdringendem Rohrstutzen (34) des Einsatzteils (30) konisch verläuft.

3. Vorrichtung nach einem der Ansprüche 1 bis 3, dadurch gekennzeichnet, dass der zweite Dichtungsabschnitt (44) an seinem dem ersten Dichtungsabschnitt (42) abgewandten freien Ende einen radial nach außen vorstehenden dritten Dichtungsabschnitt (46) zum Umgreifen der in das Rohr (12) eingebrachten Bohrung an deren Innenende aufweist.

4. Vorrichtung nach Anspruch 3, dadurch gekennzeichnet, dass der dritte Dichtungsabschnitt (46) als Außenringwulst ausgebildet ist.

5. Vorrichtung nach einem der Ansprüche 1 bis 4, dadurch gekennzeichnet, dass der Rohrstutzen (34) des Einsatzteils (30) ein konisches Ende zum Eintauchen in das Dichtungselement (28) aufweist.

6. Vorrichtung nach einem der Ansprüche 1 bis 5, dadurch gekennzeichnet, dass der Haltestutzen (22) und das Einsatzteil (30) miteinander verschraubbar sind.

## Claims

1. A branch device for a pipe, in particular a sanitation or heating pipe, comprising
- a pipe clamp (10) for surrounding the pipe (12), the pipe clamp (10) having a radial bore (24) and a holding piece (22) arranged concentrically thereto, and
- an insert member (30) adapted to be inserted into said holding piece (22) in a manner secured against axial displacement, and a pipe piece (34) extending through the radial bore 24 of the pipe clamp (10),
characterized by
- a sealing element (28) comprising a first sealing section (42) abutting the pipe clamp (10) from inside and extending concentrically to the radial bore (24) of the pipe clamp (10), and a second sealing section (44) projecting therefrom, which second section is provided for pressing against the inner surface of a bore (26) of a pipe (12) surrounded by said pipe clamp (10), where said bore is aligned with the radial bore (26) ofthe pipe clamp (10), with the pipe piece (34) ofthe insert member (30) extending through the sealing element (28).

2. The device of claim 1, wherein the second sealing section (44) extends conically when the pipe piece (34) of the insert member (30) does not extend through said sealing element (28).

3. The device of one of claims 1 to 3, wherein the second sealing section (44) has its free end, facing away from the first sealing section (42), provided with a radially outward projecting third sealing section (46) for encompassing the bore in the pipe (12) at the inside thereof.

4. The device of claim 3, wherein the third sealing section (46) is configured as an external annular bead.

5. The device of one of claims 1 to 4, wherein the pipe piece (34) of the insert member (30) has a conical end for insertion into the sealing element (28).

6. The device of one of claims 1 to 5, wherein the holding piece (22) and the insert member (30) are adapted to be screwed together.

## Revendications

1. Dispositif de branchement pour un tuyau, notamment un tuyau sanitaire ou un tuyau de chauffage, comportant:
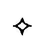 un collier de serrage (10) servant à entourer le tuyau (12), le collier de serrage (10) comportant un perçage radial (24) et un embout tubulaire de retenue (22) disposé concentriquement par rapport à ce perçage, et
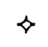 une partie formant insert (30), qui peut être insérée d'une manière bloquée contre tout déplacement axial à l'intérieur de l'embout tubulaire de retenue (22) et possède un embout tubulaire (34) destiné à s'étendre dans le perçage radial (24) du collier de serrage (10),
caractérisé par un élément d'étanchéité (28), qui possède une première partie d'étanchéité (42), qui s'applique de l'intérieur contre le collier de serrage (10) et s'étend concentriquement au perçage radial (24) du collier de serrage (10), et une seconde partie d'étanchéité (44), qui fait saillie à partir de la première partie d'étanchéité et qui est destinée à être serrée contre la face intérieure d'un perçage (26), qui est aligné avec le perçage radial (24) du collier de serrage (10), d'un tuyau (12) entouré par le collier de serrage (10), lorsque l'embout tubulaire (34) de la partie formant insert (30) s'étend jusqu'à travers l'élément d'étanchéité (28).

2. Dispositif selon la revendication 1, caractérisé en ce que la seconde partie d'étanchéité (44) a une forme conique, dans le cas où l'embout tubulaire (34) de la partie formant insert (30) ne traverse pas l'élément d'étanchéité (28).

3. Dispositif selon l'une des revendications 1 à 3, caractérisé en ce que la seconde partie d'étanchéité (44) comporte, sur son extrémité libre tournée à l'opposée de la première partie d'étanchéité (42), une troisième partie d'étanchéité (46) qui fait saillie radialement vers l'extérieur et est destinée à entourer le perçage, aménagé dans le tuyau (12), sur son extrémité intérieure.

4. Dispositif selon la revendication 3, caractérisé en ce que la troisième partie d'étanchéité (46) est agencée sous la forme d'un bourrelet annulaire extérieur.

5. Dispositif selon l'une des revendications 1 à 4, caractérisé en ce que l'embout tubulaire (34) de la partie formant insert (30) possède une extrémité conique destinée à pénétrer dans l'élément d'étanchéité (28).

6. Dispositif selon l'une des revendications 1 à 5, caractérisé en ce que l'embout de retenue (22) et la partie formant insert (30) sont susceptibles d'être réunis par vissage.
